**Europäisches Patentamt**

**European Patent Office**

**Office européen des brevets**

(19)

(11) Veröffentlichungsnummer: **0 133 842**

**A1**

(12) # EUROPÄISCHE PATENTANMELDUNG

(21) Anmeldenummer: **84810355.2**

(22) Anmeldetag: **20.07.84**

(51) Int. Cl.⁴: **F 27 B 13/00**
**C 04 B 35/52**

(30) Priorität: **11.08.83 CH 4381/83**

(43) Veröffentlichungstag der Anmeldung:
**06.03.85 Patentblatt 85/10**

(84) Benannte Vertragsstaaten:
**CH DE FR GB IT LI NL**

(71) Anmelder: **SCHWEIZERISCHE ALUMINIUM AG**

**CH-3965 Chippis(CH)**

(72) Erfinder: **Oderbolz, Stefan**
**Résidence Riondaz**
**CH-3964 Veyras(CH)**

(72) Erfinder: **Bouwmeester, Gerhard**
**Jacob Catstraat 9**
**NL-3202 AJ Spijkenisse(NL)**

(54) **Verfahren zum Betreiben eines offenen Ringkammerofens zum Herstellen von kohlenstoffhaltigen Formkörpern sowie eine Vorrichtung zur Durchführung des Verfahrens.**

(57) Zum Betreiben eines offenen Ringkammerofens, mit mindestens teilweise zusammengefassten Feuerschächten, zum Herstellen von kohlenstoffhaltigen Formkörpern wird während der Umlenkphase der Unterdruck in jedem Feuerschacht (5) bis (8) in den den Umlenkungen (U2) nahen Gurtwänden (73), (74) geregelt. Die Regelung erfolgt je nach Lage der Vorwärmzone (61) bis (64) auf der absauger- oder brennerseitigen Gurtwand (73) resp (74).

Insbesondere in Kombination mit einer Betriebssteuerung führt das Verfahren unabhängig von der Lage der Formkörper im Ofen zu gleichmässigen Qualitäten.

Fig. 2

EP 0 133 842 A1

Verfahren zum Betreiben eines offenen Ringkammerofens zum
Herstellen von kohlenstoffhaltigen Formkörpern sowie
eine Vorrichtung zur Durchführung des Verfahrens

---

Die Erfindung betrifft ein Verfahren zum Betreiben eines
offenen Ringkammerofens mit mindestens teilweise zusammengefassten Feuerschächten in den Ofenumlenkungen zum Herstellen von kohlenstoffhaltigen Formkörpern, vornehmlich
von Elektroden für die Aluminiumschmelzflusselektrolyse,
durch Regelung mindestens der Temperatur und des Unterdruckes sowie eine Vorrichtung zur Durchführung des Verfahrens.

Der offene Ringkammerofen besteht aus einer Anzahl stationärer, aneinander gereihter Brennkammern, die durch quer
zur Aneinanderreihung liegende Gurtwände von einander abgegrenzt und durch längs zur Aneinanderreihung verlaufende
Feuerschächte in Kassetten unterteilt sind. Durch Parallelanordnung von zwei Brennkammerreihen -- den Ofenseiten --
und Ueberbrücken ihrer beiden Feuerschachtsysteme -- Umlenkungen genannt -- an den Stirnseiten wird für die Feuerschächte ein Ringzustand hergestellt. Die Ueberbrückung erfolgt entweder in der Weise, dass alle Feuerschächte in
einen Sammelkanal münden oder gruppenweise umgelenkt werden, also teilweise in der Umlenkung zusammengefasst werden. Z. B. werden bei acht Feuerschächten zweimal die drei
innen liegenden Feuerschächte und die zwei äusseren Feuerschächte jeweils gemeinsam auf die andere Ofenseite geführt.

Eine getrennte Umlenkung jedes einzelnen Feuerschachtes ist selbstverständlich auch durchführbar, jedoch unzweckmässig, da sie eine sehr komplizierte und raumbeanspruchende Konstruktion erfordert und zusätzlich einen ungünstigen feuerungstechnischen Wirkungsgrad aufweisen würde.

Bei derartigen Brennöfen ist die Betriebsweise von ausserordentlichem Einfluss auf die Anodenqualität. Sowohl die Aufheizgeschwindigkeit als auch die mittlere Brenntemperatur sind für die Anodenqualität, insbesondere für Festigkeit, elektrische Leitfähigkeit und Reaktivität, ausschlaggebend. Bei zu starken zeitlichen Temperaturänderungen entstehen Risse, oder die Anoden haben schlechte Reaktivität, wenn die mittlere Brenntemperatur zu niedrig war.

Angesichts dieser Gegebenheiten hat es nicht an Vorschlägen gefehlt, den Betrieb der Brennkammeröfen durch Brennofenprozesssteuerungen mindestens teilweise zu automatisieren. Hierfür muss, damit in einem Brandzug die Betriebstemperaturverläufe beherrscht werden können, ein entsprechendes Betriebsmodell vorliegen.

Das Betriebsmodell wird seinerseits durch die Ausgangsgrössen, Sollbrennkurven und Sollgradienten sowie das dem Modell zugrunde gelegte Korrekturschema beeinflusst. Das Korrekturschema gibt Auskunft, an welchem Ort eine entsprechende Regelgrösse zu belassen oder in welcher Weise zu verändern ist, um eine Ueber- bzw. Unterschreitung der Sollbrenntemperatur zu verhindern oder entsprechend zu korrigieren. Zur Regelung der entsprechenden Grössen - in erster Linie Temperatur im Feuerschacht und Unterdruck am Absauger - werden Mikroprozessoren eingesetzt. Sie übernehmen sowohl die Datenaufnahme als auch die Weitergabe der Korrekturbefehle an die entsprechenden Stellglieder - Stellventile der Brenner und Schieber am Absauger - . Unter Ausgangsgrössen werden die äusseren Bedingungen verstanden, die von grundsätzlicher Bedeutung sind: z. B. die Ofenbauart und der Ofenzustand. Insbesondere ist hierbei die Konstruktion der Umlenkung von grossem Einfluss.

Bei der Erstellung des Betriebsmodells werden üblicherweise durch empirisch ermittelte Zusammenhänge zwischen Temperaturverlauf des Ofens und Eigenschaften der diesem unterworfenen Anoden, diejenigen in Brennkurven als optimal angesehen, die überdurchschnittliche Anodenqualität ergeben haben. Den ermittelten vorteilhaften Brennkurven -- den Sollbrennkurven -- gilt es, mit Hilfe der Stellgrössen in nachfolgenden Ofenreisen möglichst nahe zu kommen.

Wenn sich der Brandzug gesamthaft auf einer Ofenseite befindet, ist es ohne Schwierigkeiten möglich, mit einem herkömmlichen Betriebsmodell jeden einzelnen Feuerschacht individuell so einzuregeln, dass die Sollbrennkurve eingehalten wird.

Konstruktionsbedingt kann jedoch der Ringkammerofen während eines ganzen Rundbrandes, d. h. während eines Feuerdurchgangs über alle Kammern, nicht immer nach dem gleichen Prinzip gesteuert werden. Befindet sich nämlich ein Brandzug sowohl teilweise auf der einen als auch auf der anderen Ofenseite -- in der sog. Umlenkphase --, d.h. die Umlenkung ist im Brandzug inbegriffen, so ist durch die Zusammenlegung der Feuerschächte auf der alten, sowie die Aufteilung der Feuerschächte auf der neuen Ofenseite eine individuelle Einstellung der Feuerschachttemperaturen durch Unterdruckregelung in den einzelnen Feuerschächten auf der Seite des Ofens, wo sich der Kopf des Brandzuges mit der ersten Vorwärmkammer befindet, nicht mehr zufriedenstellend möglich, was eine Einbusse in der Anodenqualität zur Folge hat.

Die Erfinder haben sich daher zum Ziel gesetzt, einen Ringkammerofen der oben beschriebenen Art, sowohl ohne als auch insbesondere mit einer Brennofenprozesssteuerung derartig zu betreiben, dass die Qualität der Anoden nicht von der individuellen Lage der Anoden im Ofen abhängig ist. Die Aufgabe der Erfindung besteht insbesondere darin, bei Anwendung einer Brennofenprozesssteuerung die mit der Ofenumlenkung verbundenen Nachteile beim Ofenbetrieb zu verhindern.

Zur Lösung der gestellten Aufgabe führt, dass während der Umlenkphase der Unterdruck an der umlenkungsseitigen Gurtwand geregelt wird.

Nach einem weiteren Merkmal der Erfindung kann bei Anwesenheit des überwiegenden Teils der Vorwärmzone und der Brennerzone auf einer Ofenseite die Regelung bei konstanter Unterdruckeinstellung am Absauger auf der brennerseitigen Ofenseite erfolgen.

Als günstig hat es sich erwiesen, dass bei gleichmässiger Verteilung der Vorwärmzone auf beide Ofenseiten die Regelung des Vorderteils der Vorwärmzone durch die Absaugerunterdruckeinstellung und des Hinterteils der Vorwärmzone durch Einstellung der Regeleinrichtungen auf der Brennerseite geregelt wird.

Bei Anwesenheit des überwiegenden Teils der Vorwärmzone, auf der absaugerseitigen Ofenseite hat es sich als besonders günstig herausgestellt, die Regelung des brennerseitigen Brandzugsteils durch Einstellung der Regeleinrichtungen auf der brennerseitigen Ofenseite und die Regelung des absaugerseitigen Brandzugsteils durch die Absaugerunterdruckseinstellung durchzuführen.

Befindet sich die gesamte Vorwärmzone auf der absaugerseitigen Ofenseite, so ist es von Vorteil, die Regelvorrichtungen auf der brennerseitigen Ofenseite zu entfernen, die Regelung des brennerseitigen Brandzugsteils absaugerseitig und den absaugerseitigen Brandzugsteil durch die Absaugerunterdruckseinstellung zu regeln.

Das vorgeschlagene Verfahren hat den Vorteil, dass die individuelle Regelung der Feuerschächte, wie sie bei irgend einer Position des Brandzugs auf nur einer Ofenseite durch ein Standard-Steuerungsmodell möglich ist, sich mindestens teilweise auch über die Umlenkungsphase erstreckt, was die Annäherung an die vorgegebene Sollbrennkurve wesentlich erleichtert und damit eine bessere Anodenqualität hervorbringt.

Weitere Vorteile             und Einzelheiten ergeben sich anhand der Zeichnung. Diese zeigt in

Fig. 1        schematisch einen Ringkammerofen, in

Fig. 2        schematisch einen Ausschnitt der Stirnseite eines Ringkammerofens und in

Fig. 3        schematisch den Brandzug in verschiedenen Positionen.

Das Betriebsmodell zur Steuerung eines Ringkammerofens wird in einen Standardteil und einen Umlenkteil eingeteilt. Der Standardteil beinhaltet die Feuersituation, in der die einzelnen Feuerschächte unabhängig voneinander reguliert werden können; eine solche Ofensituation wird von der Erfindung nicht berührt, sondern es werden nur die Feuersituationen erfasst, bei denen sich der Brandzug in der Umlenkphase befindet, wobei darunter alle diejenigen Uebergangssituationen verstanden werden, bei denen sich die Vorwärmzone einschliesslich allfälliger Dichtkammer von einer Ofenseite auf die andere bewegt.

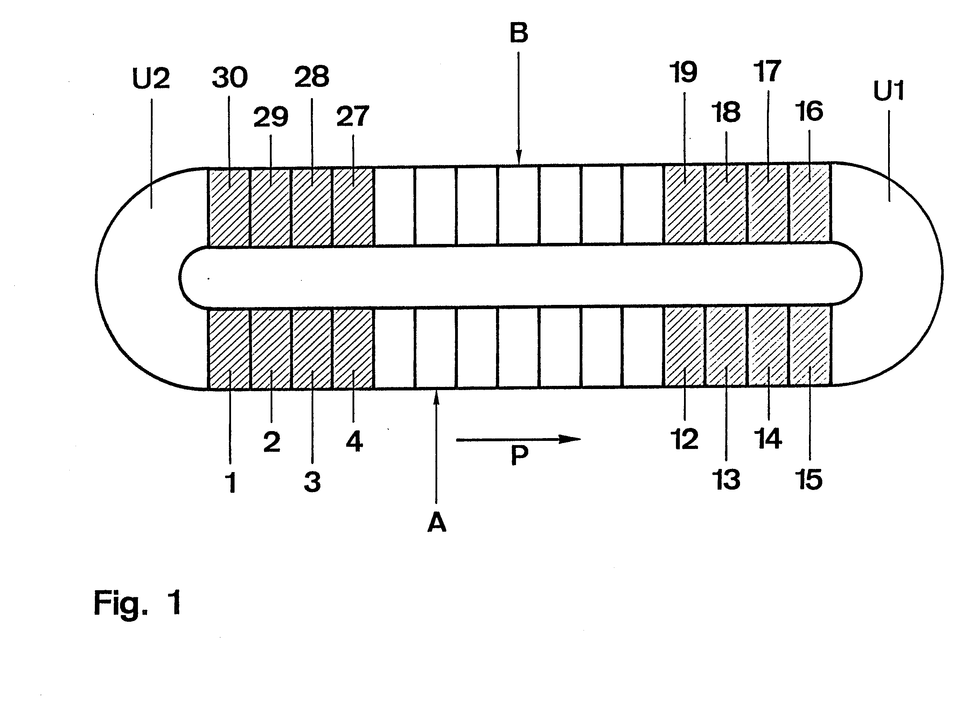

Fig. 1 zeigt beispielhaft einen Ringkammerofen, bestehend aus zwei Ofenseiten A und B. Jede Seite hat 15 Kammern, 1 - 15 und 16 - 30. Die Feuerschächte wurden der Uebersichtlichkeit wegen nicht eingezeichnet. Mit Hilfe von Umlenkungen U1 und U2 werden die beiden Ofenseiten überbrückt. Die Gesamtanordnung bildet einen Ringzustand, wobei in den Umlenkungen U1 und U2 jeweils mehrere Feuerschächte gemeinsam von einer Ofenseite auf die andere überführt werden. Von der Erfindung werden bei der durch den Pfeil P angegebenen Richtung des Feuerfortschritts die letzten Kammern, je nach Brandzugsanordnung etwa 12, 13, 14, 15 der Ofenseite A und die ersten Kammern, etwa 16, 17, 18, 19, der Ofenseite B bei der Umlenkung U1 und bei der Umlenkung U2 auf der Ofenseite B die letzten Kammern, etwa 27, 28, 29, 30 sowie auf der Ofenseite A die ersten Kammern, etwa 1, 2, 3, 4, betroffen. Bei Drehung der Feuerrichtung gilt Entsprechendes in umgekehrter Folge. Die genaue Anzahl der von der Umlenkphase betroffenen Kammern hängt von der jeweils verwendeten Anzahl Kammern für die Vorwärmzone ab und ist für jeden Ofenteil A, B zahlenmässig gleich. Für einen Brandzug mit einer Vorwärmzone bestehend aus vier Kammern sind die betreffenden Kammern schraffiert dargestellt.

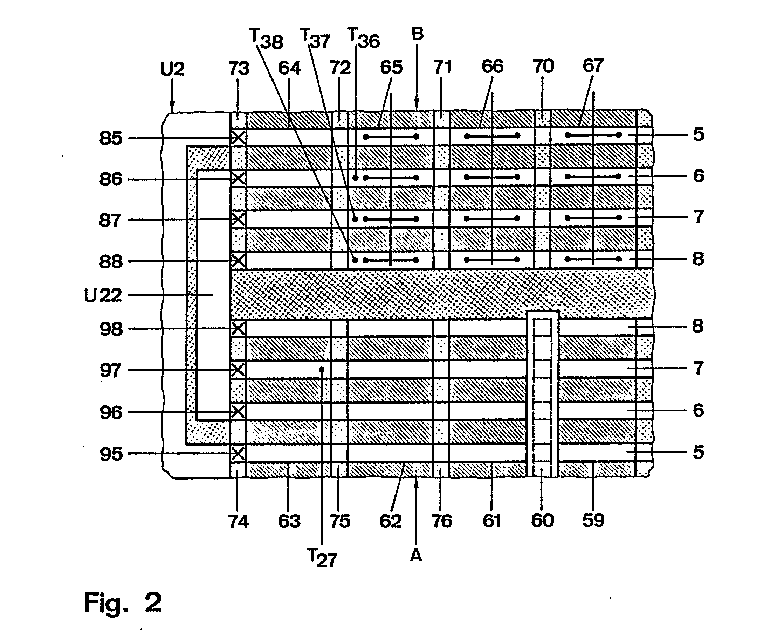

Fig. 2. zeigt beispielhaft den Absauger 60 und drei Vorwärmkammern 61, 62, 63 auf der Ofenseite A sowie eine vierte Vorwärmkammer 64 auf der Ofenseite B, der sich drei Brennerkammern 65, 66, 67 anschliessen. Die Feuerschächte 6, 7, 8 auf der Ofenseite B sind in der Umlenkung U2 zu einem gemeinsamen Kanal U 22 zusammengefasst und setzen sich auf der Ofenseite A wieder einzeln fort. Die Gurtwände 70 bis 76 trennen die Feuerschächte in Kammerbereiche. Die Gurtwände 73 und 74 teilen weiterhin die Umlenkung vom Kammerbereich des Ofens ab und enthalten die erfindungsgemässen Regeleinrichtungen 85 bis 88 und 95 bis 98. Die dem Absauger 60 unmittelbar vorgelagerte Kammer 59 dient üblicherweise als Dichtkammer.

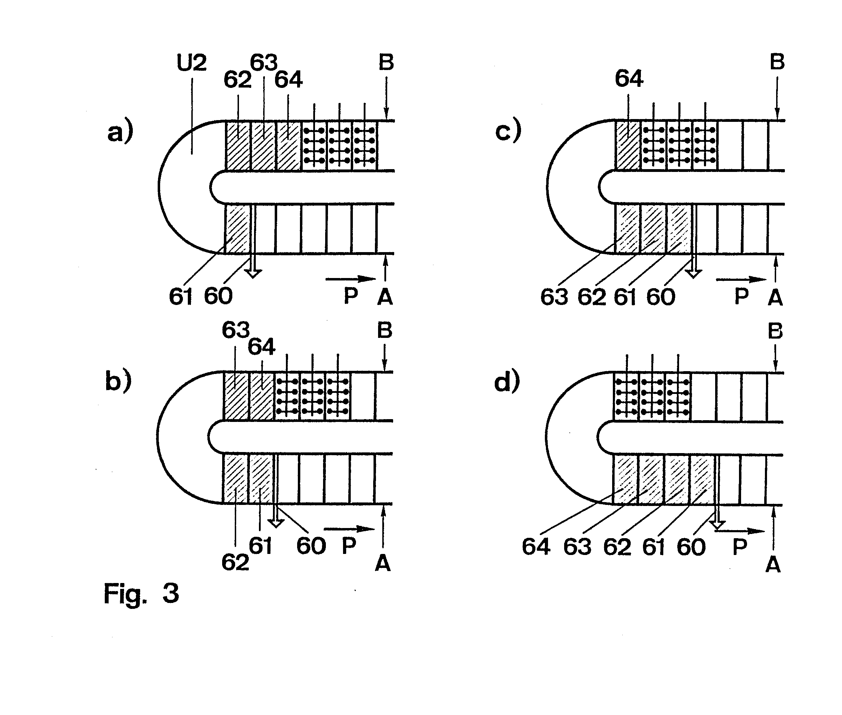

In Fig. 3 geht der Brandzug von der Ofenseite B zur Ofenseite A. Mit einem Brandzug von beispielsweise vier Kammern in der Vorwärmzone - schraffiert dargestellt - sind alle Umlenksituationen erfasst. Fig. 3 a zeigt die erste Kammer 61 der Vorwärmzone auf der Ofenseite A, während sich die weiteren Kammern 62, 63, 64 der Vorwärmzone sowie der Rest des Brandzuges - dargestellt sind nur die drei Brennerkammern - noch auf der Ofenseite B befinden. Die Gasmengenänderungen werden gemäss des Standardteils des Kontrollmodells durchgeführt. Am Absauger 60 werden fixe Einstellungen, entweder mit einem Stellglied für alle Feuerschächte oder individuell für jeden Feuerschacht, gemacht. Die Einstellungen werden vorteilhaft vorher durch das Betriebssteuerungssystem festgelegt und in gewissen Zeitperioden anhand von neuen Messungen den Unterdruckverhältnissen angepasst. Die ebenfalls vom Prozesssteuerungssystem vorgegebenen Unterdruckänderungen werden an den Regelvorrichtungen 85, 86, 87, 88 (Fig. 2), z. B. Schiebern, auf der Ofenseite B vorgenommen. Ist die Wirkung dieser Verstellungen ungenügend, so muss die Absaugereinstellung geändert werden.

Fig. 3 b zeigt zwei Kammern 61, 62 der Vorwärmzone auf der Ofenseite A und zwei Kammern 63, 64 der Vorwärmzone auf der Ofenseite B sowie die Brennerkammern. In dieser Umlenksituation werden die Gasmengenänderungen gemäss des Standardteils durchgeführt. Die Unterdruckänderungen werden für die Kammern auf der Ofenseite A durch Einstellungen am Absauger 60, für die Kammern auf der Ofenseite B durch die Regeleinrichtungen 85, 86, 87, 88 in der der Umlenkung benachbarten Gurtwand 73 der Ofenseite B bewirkt.

Sind bereits, wie Fig. 3 c und Fig. 2 zeigen, die ersten drei Kammern 61, 62, 63 der Vorwärmzone auf der Ofenseite A und nur die letzte Kammer 64 der Vorwärmzone noch gemeinsam mit den Brennerkammern auf der Ofenseite B, so werden bei Aenderungen der Gasmengen in einem Feuerschacht in den der Umlenkung unmittelbar benachbarten Kammern 63, 64 die Gasmengen auf die zusammenhängenden Feuerschächte in der Vorwärmzone gleichmässig verteilt und über die Unterdruckregelung am Absauger 60 dem entsprechenden Feuerschacht zugeführt. Soll beispielsweise die Temperatur $T_{27}$ (Fig. 2) im Feuerschacht 7 der Ofenseite A korrigiert werden und die Temperaturen $T_{36}$ bis $T_{38}$ liegen im tolerierten Schwankungsbereich der Sollbrennkurve, dann muss die Gasmenge in der Vorwärmzone in den Feuerschächten 6, 7 und 8 (6, 7, 8 werden gemeinsamen umgelenkt) reduziert resp. erhöht und die Einstellung am Absauger des Feuerschachtes 7 geöffnet resp. geschlossen werden. Die einzelnen Aktionen werden in der Umlenkung für die endgültigen Steuerungsaktionen kombiniert. Die notwendige Regelung der Unterdruckänderungen verteilt sich wie folgt: Die Kammern 61, 62 und 63 der Vorwärmzone werden mit Hilfe der Absaugereinstellungen geregelt und die Kammer 64 sowie mindestens ein Teil der Brennerzone wird mit Hilfe der Regeleinrichtungen 85, 86, 87, 88 in der Gurtwand 73 (Fig. 2) beeinflusst.

Fig. 3 d zeigt die Umlenksituation, bei der sich alle Kammern 61, 62, 63, 64 der Vorwärmzone bereits auf der Ofenseite A befinden. Die Gasmengenänderungen werden im Prinzip analog zu der vorbeschriebenen Situation gemäss Fig. 3 c durchgeführt. In dieser neuen Situation werden die Regeleinrichtungen 85, 86, 87, 88 auf der Ofenseite, auf der sich die Brennerzone befindet, also auf der Ofenseite B, entfernt und die Regelung des Brandzugs auf der Ofenseite A durch die Regeleinrichtungen 95, 96, 97, 98 in der Gurtwand 74 bewirkt und alle Kammern der Vorwärmzone durch die Absaugereinstellung geregelt. Bei eventuellen notwendigen Unterdruckänderungen in dem der Vorwärmzone nahen Teil der Brennerzone muss eine zusätzliche gezielte Gasmengenänderung durchgeführt werden.

Die Regelung der Unterdrücke in der Umlenkung durch die Regelvorrichtungen 85 bis 88, 95 bis 98 in der Gurtwand 73 bzw. 74 erfolgt durch Verengung des Querschnitts der Durchgangsöffnung der Gurtwand vom Feuerschacht zur Umlenkung. Die Querschnittsveränderung wird vorzugsweise durch Schieber bewirkt, welche bevorzugt aufgrund der Korrekturbefehle des dem Betriebsmodell zugeordneten Korrekturschemas mit Hilfe von Stellmotoren positioniert werden können. Der Schieber besteht in seiner einfachsten Ausführungsform aus einem mit Gummilippen umrandeten Metallblech.

PATENTANSPRUECHE

_____

1. Verfahren zum Betreiben eines offenen Ringkammerofens
   mit mindestens teilweise zusammengefassten Feuerschächten in den Ofenumlenkungen zum Herstellen von kohlenstoffhaltigen Formkörpern, vornehmlich von Elektroden
   für die Aluminiumschmelzflusselektrolyse, durch Regelung mindestens der Temperatur und des Unterdrucks,
   dadurch gekennzeichnet,
   dass während der Umlenkphase der Unterdruck in jedem
   Feuerschacht (5 bis 8), in den den Umlenkungen (U1, U2)
   nahen Gurtwänden (73, 74) geregelt wird.

2. Verfahren nach Anspruch 1, dadurch gekennzeichnet, dass
   die Regelung durch Regeleinrichtungen (85 bis 88, 95
   bis 98), welche die Querschnitte der Durchgangsöffnungen der der Umlenkung nahen Gurtwände (73, 74) verengen,
   erfolgt.

3. Verfahren nach Anspruch 1 oder 2, dadurch gekennzeichnet, dass bei Anwesenheit des überwiegenden Teils (61,
   62, 63 resp. 61, 62, 63, 64) der Vorwärmzone (61 bis
   64) und der Brennerzone (65, 66, 67) auf einer Ofenseite (A resp. B) die Regelung bei konstanter Unterdruckeinstellung am Absauger (60) auf der brennerseitigen
   Ofenseite erfolgt.

4. Verfahren nach Anspruch 1 oder 2, dadurch gekennzeichnet, dass bei gleichmässiger Verteilung der Vorwärmzone
   (61 bis 64) auf beide Ofenseiten (A, B) die Regelung des Hinterteils (63,64) der Vorwärmzone durch Einstellung
der Regeleinrichtungen (85-88) auf der brennerseitigen
Ofenseite erfolgt und der Vorderteil (61,62) der Vorwärmzone durch die Unterdruckeinstellung am Absauger (60)
geregelt wird.

5.  Verfahren nach Anspruch 1 oder 2, dadurch gekennzeichnet,
    dass bei Anwesenheit des überwiegenden Teils der Vorwärmzone (61,62,63), auf der absaugerseitigen Ofenseite die
    Regelung des brennerseitigen Brandzugsteils durch Einstellung der Regeleinrichtungen auf der brennerseitigen
    Ofenseite und der absaugerseitige Brandzugsteil durch
    die Unterdruckeinstellung am Absauger (60) erfolgt.

6.  Verfahren nach Anspruch 1 oder 2, dadurch gekennzeichnet,
    dass bei Anwesenheit der Vorwärmzone (61,62,63,64) auf
    der absaugerseitigen Ofenseite die Regelungseinrichtungen
    (85 bis 88 resp. 95 bis 98) auf der brennerseitigen Ofenseite entfernt werden, die Regelung des brennerseitigen
    Brandzugsteils mit Hilfe der absaugerseitigen Regelvorrichtungen und der absaugerseitige Brandzugsteil durch
    die Unterdurckeinstellung am Absauger (60) erfolgt.

7.  Verfahren nach mindestens einem der Ansprüche 1 - 6,
    dadurch gekennzeichnet, dass die Unterdruckeinstellung
    am Absauger (60) für jeden Feuerschacht einzeln erfolgt.

8. Vorrichtung zur Durchführung des Verfahrens nach mindestens einem der Ansprüche 1 - 7, dadurch gekennzeichnet, dass die Regelungseinrichtungen (85 bis 88, 95 bis 98) entfernbare Schieber sind.

9. Vorrichtung zur Durchführung des Verfahrens nach Anspruch 8, dadurch gekennzeichnet, dass die Schieber mit einem Stellmotor versehen sind.

10. Vorrichtung zur Durchführung des Verfahrens nach Anspruch 9, dadurch gekennzeichnet, dass die Schieber aufgrund der Korrekturbefehle des dem Betriebsmodell zugeordneten Korrekturschemas mit Hilfe des Stellmotors positioniert werden.

Fig. 1

U2  30  28  B  19  17  U1
29  27  18  16
30  29  28  27
2  4  12  14
1  3  A  P  13  15

1/3

0133842

0133842

Fig. 2

Fig. 3

**0133842**
Nummer der Anmeldung

EP 84 81 0355

## EUROPÄISCHER RECHERCHENBERICHT

Europäisches
Patentamt

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|-----------|-----------------------------------------------------------------------------------|-------------------|-------------------------------------------|
| A | US-A-2 699 931 (J.D. BUHLER) | | F 27 B 13/00<br>C 04 B 35/52 |
| | --- | | |
| A | FR-A-2 350 565<br>(ELETTROCARBONIUM SPA.) | | |
| | --- | | |
| A | DE-C- 858 223 (A. HABLA) | | |
| | ----- | | |

**RECHERCHIERTE SACHGEBIETE (Int. Cl. ³)**

F 27 B
C 04 B

Der vorliegende Recherchenbericht wurde für alle Patentansprüche erstellt.

| Recherchenort | Abschlußdatum der Recherche | Prüfer |
|---------------|------------------------------|--------|
| DEN HAAG | 16-08-1984 | COULOMB J.C. |